# EUROPÄISCHE PATENTSCHRIFT

(11) **EP 2 733 830 B1**
(45) Veröffentlichungstag und Bekanntmachung des Hinweises auf die Patenterteilung: **27.12.2017**
(21) Anmeldenummer: 13193085.1
(22) Anmeldetag: 15.11.2013
(51) Int. Cl.: H02K 41/02, H02K 7/00, H02K 16/00, H02K 7/116, H02K 21/14, H02K 41/03

(54) **Hubdrehvorrichtung**
Lifting and turning device
Dispositif de levage-rotation

(30) Priorität: 16.11.2012 EP 12192962
(43) Veröffentlichungstag der Anmeldung: 21.05.2014
(73) Patentinhaber: NTI AG, 8957 Spreitenbach (CH)
(72) Erfinder: Rohner, Ronald, 8967 Widen (CH); Blumer, Ernst, 8053 Zürich (CH)
(74) Vertreter: Bohest AG

(56) Entgegenhaltungen:
- EP-A1- 2 523 320
- DE-A1-102007 021 322
- DE-A1-102010 028 872

## Beschreibung

Die vorliegende Erfindung betrifft eine Hubdrehvorrichtung gemäss dem unabhängigen Patentanspruch.

Kombinierte linear-rotative Bewegungen finden sich in einer Vielzahl von Anwendungen in der Automationstechnik. Als Beispiele seien das Einschrauben einer Schraube oder das Aufschrauben eines Deckels auf einen Behälter genannt. Oftmals muss ein Produkt oder Fertigungsteil auch um einen bestimmten Winkel gedreht werden, wozu es gefasst, gehoben, gedreht und anschliessend wieder abgelegt werden muss. Für solche kombinierte linear-rotative Bewegungen werden vielfach Hubdrehvorrichtungen eingesetzt.

Eine bekannte Hubdrehvorrichtung umfasst einen zum Beispiel permanenterregten tubularen Linearmotor und einen an den Linearmotor koaxial angebauten Drehmotor, sowie eine vom Linearmotor und vom Drehmotor antreibbare Aktuatorwelle, deren freies Ende zur Befestigung eines Manipulationswerkzeugs dient. Der Linearmotor weist einen hohlen tubularen Stator und einen in diesem Stator axial verschiebbaren Läufer auf, in welchem die Permanentmagnete des Linearmotors angeordnet sind. Der Drehmotor umfasst im Wesentlichen eine feststehende Statorwicklung und einen innerhalb der Statorwicklung angeordneten hohlen (Innen-)Rotor. Im Falle eines permanenterregten Drehmotors besteht der Rotor beispielsweise aus einer Hohlwelle mit auf der Hohlwelle aufgeklebten Permanentmagneten. Die Aktuatorwelle ist durch die Hohlwelle (Rotor) des Drehmotors hindurch geführt und ist innerhalb des Rotors gelagert. Ferner ist die Aktuatorwelle an den Läufer des Linearmotors (sowohl auf Zug als auch auf Schub) in axialer Richtung so angekoppelt, dass die lineare Bewegung des Läufers direkt auf die Aktuatorwelle übertragen wird. Die Ankopplung des Läufers des Linearmotors an die Aktuatorwelle ist dabei so ausgebildet, dass sich eine Drehbewegung der Aktuatorwelle nicht auf den Läufer des Linearmotors überträgt. Über eine mechanische Kupplung ist der Rotor des Drehmotors mit der Aktuatorwelle drehgekoppelt, so dass eine Drehbewegung des Rotors des Drehmotors auf die Aktuatorwelle übertragen wird. Die Ankopplung des Rotors des Drehmotors an die Aktuatorwelle ist dabei so ausgebildet, dass die Aktuatorwelle in axialer Richtung bewegt werden kann, der Rotor dabei aber in axialer Richtung nicht mitbewegt wird. Eine solche mechanische Kupplung, welche die Drehung des Rotors auf die Aktuatorwelle überträgt, kann beispielsweise einen mit dem Rotor drehfest verbundenen Mitnehmer in Form eines Rings mit einer radial nach innen vorspringenden Nase umfassen, welche in eine auf der Aktuatorwelle vorgesehene Längsnut eingreift, die sich parallel zur Längsachse der Aktuatorwelle erstreckt, so dass die Nase in dieser Längsnut gleiten kann. Somit kann ein Drehmoment vom Rotor auf die Aktuatorwelle übertragen werden und gleichzeitig kann die Aktuatorwelle über die Länge der Längsnut eine axiale (lineare) Bewegung ausführen. Zur Übertragung grösserer Drehmomente kann der Mitnehmerring auch mit zwei oder mehreren solchen Nasen und die Aktuatorwelle entsprechend mit zwei oder mehreren Längsnuten versehen sein. Der Drehmotor ist üblicherweise mit einer eingebauten Sensorik zur Erfassung der Drehposition des Rotors und damit der Aktuatorwelle ausgestattet. Ebenso ist der Linearmotor mit einer eingebauten Sensorik zur Erfassung der axialen Position des Läufers und damit der Aktuatorwelle versehen.

In Anwendungen, wie zum Beispiel dem Aufschrauben von Deckeln auf Flaschen, befinden sich solche Hubdrehvorrichtungen nebeneinander oder sind auf einem Drehteller platziert, sodass kompakter schlanker Aufbau von grossem Vorteil ist. Ebenso ist bei derartigen Anwendungen das Rotationsträgheitsmoment der Last (z.B. Deckel plus Deckelhalterung) im Verhältnis zum Rotationsträgheitsmoment der rotativ bewegten Teile der Hubdrehvorrichtung relativ klein bzw. in einem vertretbaren Verhältnis. Hinzu kommt, dass in solchen Anwendungen der Drehpunkt der Last auf der Längsachse der Aktuatorwelle (Drehachse der Hubdrehvorrichtung) angeordnet ist, so dass das Rotationsträgheitsmoment des zu bewegenden Teils nicht durch die Regel des "Steiner'schen Satzes" vergrössert wird.

In Montage- und Handhabungseinrichtungen besteht oftmals die Notwendigkeit, ein Produkt oder ein Fertigungsteil mit einer Drehbewegung auf einer Kreisbahn zu verschieben. Dazu muss es gefasst, gehoben, gedreht und anschliessend wieder abgelegt werden ("pick-and-place"). Bei diesen Hubdrehbewegungen befindet sich das zu bewegende Teil in einer nicht vernachlässigbaren radialen Distanz zur Drehachse der Hubdrehvorrichtung. Das Rotationsträgheitsmoment wird so aufgrund des anzuwendenden Steiner'schen Satzes schnell sehr gross. Folgendes Beispiel soll dies verdeutlichen: Ein zylindrisches Teil mit dem Radius r = 4 cm und einer Masse von m = 1 kg hat ein Rotationsträgheitsmoment bezogen auf seine Längsachse von J = 1/2 · m · r² = 0.0008 kgm². Befestigt man das gleiche zylindrische Teil an einem Hebelarm mit der Länge a = 50 cm (Abstand der Längsachse des zylindrischen Teils von der Drehachse) ergibt sich ein Rotationsträgheitsmoment von J = 1/2 · m · r² + m · a² = 0.2508 kgm². Hinzu kommt noch das Rotationsträgheitsmoment des Hebelarms selbst. Ein derartiges Rotationsträgheitsmoment ist schnell um mehrere Grössenordnungen grösser als das Rotationsträgheitsmoment des Drehmotors in der Hubdrehvorrichtung.

Üblicherweise sollte das Verhältnis vom Rotationsträgheitsmoment des Drehmotors zum Rotationsträgheitsmoment der Last im Bereich von 1:10 bis maximal 1:30 liegen (optimaler Fall 1:1), da andernfalls grosse regelungstechnische Probleme entstehen. Nebst der in mehrerer Hinsicht unattraktiven Methode, den Drehmotor entsprechend gross zu wählen, wird typischerweise mittels eines Untersetzungsgetriebes eine sogenannte Lastanpassung durchgeführt. Ein Getriebe mit der Untersetzung i:1 (i>1) reduziert das von der abtriebsseitig angeordneten Last auf die Antriebsseite übertragene Rotationsträgheitsmoment um den Faktor 1/i². Gleichzeitig wird die Drehgeschwindigkeit des Drehmotors abtriebsseitig (lastseitig) um den Faktor 1/i reduziert, das verfügbare Drehmoment aber um den Faktor i erhöht. Häufig werden für derartige Untersetzungsaufgaben Planetengetriebe oder Cyclo-Getriebe eingesetzt, da bei diesen Getriebearten die Antriebs- und Abtriebswellen koaxial angeordnet sind und somit auf vergleichsweise kleinem Bauraum sehr hohe Untersetzungsverhältnisse realisiert werden können.

Die eben erläuterte Methode der Lastanpassung kann prinzipiell auch auf eine Hubdrehvorrichtung angewandt werden. Hierzu kann das Cyclo- oder Planetengetriebe direkt an den Drehmotor angeflanscht und zwischen dem Drehmotor und dem Linearmotor angeordnet werden. Es werden dann neben dem Drehmotor auch Cyclo- oder Planetengetriebe mit Hohlwelle eingesetzt, wobei die Aktuatorwelle sowohl durch die Hohlwelle (Rotor) des Drehmotors als auch durch das Getriebe geführt ist. Die Hohlwelle (Rotor) des Drehmotors ist mit der Eingangsseite des Getriebes (Antriebsseite) drehfest verbunden, während der Mitnehmerring der mechanischen Kupplung, der die Mitnehmer-Nase aufweist, drehfest mit der Ausgangsseite (Abtriebsseite) des Getriebes verbunden ist. Eine solche Hubdrehvorrichtung wäre somit lediglich um die (axiale) Länge des Getriebes verlängert.

Ein wesentliches Problem bei der technischen Realisierung eines solchen Hubdrehmotors mit Lastanpassung besteht allerdings in der Ausführung der mechanischen Kupplung, die benötigt wird, um die Drehbewegung des Rotors des Drehmotors auf die (axial beweglich angeordnete) Aktuatorwelle zu übertragen. In industriellen Anwendungen werden mehrere Millionen von reversierenden und gleichzeitigen Dreh- und Linearbewegungen gefordert. Das mechanische Spiel zwischen Mitnehmer-Nase und Nut sollte jeweils im Bereich von nur wenigen Hundertstel eines Millimeters über die volle Länge der Nut liegen. Zum einen hängt davon nämlich die rotative Positioniergenauigkeit ab, zum anderen führt ein zu grosses Spiel zwischen Mitnehmer-Nase und Nut zu einer verstärkten mechanischen Belastung der Mitnehmer-Nase und der Seitenwände der Nut durch Stösse.

Die im Idealfall bestehende Belastung der mechanischen Kupplung berechnet sich aus dem Produkt der Flächenpressung und der linearen Geschwindigkeit zwischen Mitnehmer-Nase und Nutseitenwand. Während die lineare Geschwindigkeit nicht beeinflusst werden kann, da sie durch die jeweilige Anwendung der Hubdrehvorrichtung gegeben ist, kann die Flächenpressung konstruktiv beeinflusst werden. So sollte die Seitenfläche der Mitnehmer-Nase aus Sicht der Belastung der mechanischen Kupplung möglichst gross sein. Eine grössere Seitenfläche der Mitnehmer-Nase kann auf drei Arten erreicht werden. Beispielsweise kann die Höhe der Mitnehmer-Nase vergrössert werden. Als Konsequenz muss dann allerdings auch die Tiefe der Nut in der Aktuatorwelle vergrössert werden. Eine grössere Tiefe der Nut in der Aktuatorwelle bedingt jedoch, dass die Aktuatorwelle einen grösseren Durchmesser haben muss, was nicht in jedem Fall möglich ist, da der maximale Durchmesser des Durchgangsloches in der Hohlwelle (Rotor) des Drehmotors beschränkt ist und die Aktuatorwelle durch die Hohlwelle durchgeführt werden muss. Eine weitere Möglichkeit besteht darin, die Länge der Mitnehmer-Nase zu vergrössern. Vergrössert man die Länge der Mitnehmer-Nase, führt dies bei gleicher Länge der Nut in der Aktuatorwelle zu einem reduzierten linearen Hub. Eine Verlängerung der Nut führt hingegen zu einer Vergrösserung der gesamten Hubdrehvorrichtung, da aus lagertechnischen Gründen nicht die gesamte Länge der Aktuatorwelle für die Nut zur Verfügung steht. Eine weitere Möglichkeit besteht wie vorstehend schon erwähnt darin, mehrere Nuten in der Aktuatorwelle und entsprechend mehrere Mitnehmer-Nasen vorzusehen und dadurch die gesamte Seitenfläche (Anlagefläche) zu erhöhen. Unter Annahme einer optimalen Materialwahl für die Mitnehmer-Nasen und die Aktuatorwelle ist jedoch die maximale Drehmomentbelastbarkeit der mechanischen Kupplung aufgrund der Baugrössse des Hubdrehmotors gegeben und kann nicht beliebig erhöht werden.

Betrachtet man den vorstehend erläuterten Ansatz der Lastanpassung durch ein direkt an den Drehmotor angebautes Planeten- oder Cyclogetriebe, so erkennt man, dass ausserdem ein um den Faktor i der Übersetzung/Untersetzung des Getriebes grösseres Drehmoment auf die mechanische Kupplung wirkt, die ja abtriebsseitig (also am Getriebeausgang) angeordnet ist, wodurch das von der Kupplung auf die Aktuatorwelle zu übertragende Drehmoment noch um den Faktor i vergrössert ist. Gleichzeitig wird zwar die Drehgeschwindigkeit ebenfalls um den Faktor 1/i reduziert, allerdings hat dies keinen Einfluss auf die Belastung der mechanischen Kupplung, wie oben bereits erläutert. Aufgrund der maximal realisierbaren Drehmomentbelastung der mechanischen Kupplung ist somit auch der maximale Faktor i der Übersetzung/Untersetzung bzw. die mögliche Lastanpassung stark eingeschränkt.

Ein anderer Lösungsansatz besteht darin, den Drehmotor inklusive angeflanschtes Untersetzungsgetriebe insgesamt verschiebbar auszubilden und mit Hilfe des Linearmotors zu verschieben, wobei die Aktuatorwelle (über das Getriebe) dann nur noch mit dem Drehmotor verbunden wäre, da die lineare (axiale) Bewegung auf den Drehmotor als Ganzes (einschliesslich der Aktuatorwelle) übertragen wird. Dadurch würden die beschriebene mechanische (Gleit-)Kupplung und die damit verbundenen Probleme entfallen.
Dieser Lösungsansatz ist allerdings in mehrerer Hinsicht nachteilig. Erstens besteht die linear zu bewegende Masse nun aus dem kompletten Drehmotor inklusive Getriebe. Damit muss ein bedeutend stärkerer (grösserer) Linearmotor eingesetzt werden, um bei der Anwendung dieselbe Leistungsfähigkeit zu erreichen. Zweitens müssen sämtliche elektrischen Leistungs- und Sensorikkabel, die zum Betrieb des Drehmotors notwendig sind, als Schleppkettenkabel ausgeführt werden (da sie stets mitbewegt werden) und schon nach wenigen Millionen Hüben wartungstechnisch ersetzt werden. Und drittens ist eine integrierte Bauform nicht mehr möglich und die gesamte Hubdrehvorrichtung verliert den Vorteil der raumsparenden Bauweise, sie wird wesentlich unhandlicher und lässt sich nicht mehr so leicht in Maschinen oder sonstigen Einrichtungen einbauen.

Ferner ist aus EP-A-2 523 320 eine Hubdrehvorrichtung gemäss dem Oberbegriff des unabhängigen Patentanspruchs bekannt.
Der Erfindung liegt die Aufgabe zugrunde, eine raumsparende Hubdrehvorrichtung vorzuschlagen unter Vermeidung der vorstehend beschriebenen Nachteile.
Diese Aufgabe wird erfindungsgemässe durch eine Hubdrehvorrichtung gelöst, wie sie durch die Merkmale des unabhängigen Patentanspruchs 1 spezifiziert ist. Weitere vorteilhafte Aspekte ergeben sich aus den Markmalen der abhängigen Patentansprüche.
So umfasst die erfindungsgemässe Hubdrehvorrichtung eine Aktuatorwelle mit einer Längsachse, einen Linearmotor zur Bewegung der Aktuatorwelle in Richtung ihrer Längsachse, sowie einen Drehmotor zur Bewegung der Aktuatorwelle um ihre Längsachse herum. Der Drehmotor weist einen hohlen Rotor auf, durch welchen die Aktuatorwelle hindurchgeführt ist und der mit der Aktuatorwelle kinematisch drehgekoppelt ist. Der Linearmotor ist relativ zum Drehmotor ortsfest angeordnet und weist einen zu der durch den Rotor des Drehmotors hindurchgeführten Akuatorwelle koaxialen angeordneten Läufer auf (die Längsachse der Aktuatorwelle und die Längsachse des Läufers sind identisch). Der Läufer ist an einem ersten Längsende der Aktuatorwelle kinematisch gekoppelt in Bezug auf die Bewegung der Aktuatorwelle in Richtung ihrer Längsachse. Die Hubdrehvorrichtung umfasst ferner ein Untersetzungsgetriebe, wobei das Untersetzungsgetriebe an einem zweiten Längsende der Aktuatorwelle angeordnet ist und ist in Richtung der Längsachse der Aktuatorwelle relativ zum Drehmotor bewegbar angeordnet. Das Untersetzungsgetriebe ist antriebsseitig kinematisch mit der Aktuatorwelle gekoppelt, und zwar sowohl in Bezug auf eine Bewegung in Richtung der Längsachse der Aktuatorwelle als auch in Bezug auf eine rotative Bewegung um die Längsachse der Aktuatorwelle herum.

Bei der erfindungsgemässen Hubdrehvorrichtung findet also die Lastanpassung des Drehmotors nicht vor der mechanischen Drehkopplung zwischen dem Rotor des Drehmotors und der Aktuatorwelle statt, sondern erst nach dieser mechanischen Drehkopplung. Dadurch wird die Belastung der eingesetzten mechanischen Drehkupplung wesentlich reduziert. Ferner wird dadurch eine Reihe von weiteren Vorteilen erreicht, die weiter unten noch im Detail beschrieben sind.

Gemäss einem vorteilhaften Aspekt der Erfindung ist das Untersetzungsgetriebe zur Übertragung von Axialkräften, darunter sind Kräfte in Richtung der Längsachse der Aktuatorwelle zu verstehen, auf die Aktuatorwelle ausgebildet. Das Getriebe kann also Axialkräfte, die auf das Getriebe wirken, auf die Aktuatorwelle übertragen, und diese Kräfte werden dann über die kinematische Kopplung der Aktuatorwelle mit dem Läufer des Linearmotors auf den Läufer des Linearmotors übertragen, sodass solche Axialkräfte gegebenenfalls von dem Linearmotor kompensiert werden können. Umgekehrt werden auf diese Weise Axialkräfte vom Linearmotor auf die Last übertragen.

Gemäss einem weiteren vorteilhaften Aspekt der Erfindung weist das Untersetzungsgetriebe ein Getriebegehäuse auf, und dieses Getriebegehäuse (und damit das Getriebe als Ganzes) ist relativ zum Drehmotor drehfest angeordnet. Unter "drehfest" ist dabei zu verstehen, dass sich das Getriebegehäuse bzw. das Untersetzungsgetriebe als Ganzes aufgrund von bei der Anwendung auf der Abtriebs- und/oder der Antriebsseite wirkenden Drehmomente entweder gar nicht oder allenfalls um einen gegenüber der geforderten Drehpositionsgenauigkeit vernachlässigbaren Winkel relativ zum Drehmotor verdrehen darf, sodass die geforderte Drehpositionsgenauigkeit eingehalten wird.

Gemäss einem weiteren vorteilhaften Aspekt der Erfindung ist das Untersetzungsgetriebe querkraftfest relativ zur Längsachse der Aktuatorwelle angeordnet. Unter "querkraftfest" ist dabei zu verstehen, dass sich das Untersetzungsgetriebe als Ganzes aufgrund von bei der Anwendung quer zur Längsachse der Aktuatorwelle auf das Getriebe wirkenden Querkräften (Seitenkräften, insbesondere senkrecht zur Längsachse der Aktuatorwelle wirkenden Kräften) nicht oder nur in vernachlässigbarem Ausmass quer zur Längsachse der Aktuatorwelle bewegen darf, damit die Funktionstüchtigkeit der Hubdrehvorrichtung erhalten bleibt (Bewegbarkeit der Aktuatorwelle).

Gemäss einem weiteren vorteilhaften Aspekt der Erfindung ist das Untersetzungsgetriebe relativ zur Längsachse der Aktuatorwelle verkippungsfest angeordnet. Unter "verkippungsfest" ist dabei zu verstehen, dass das Untersetzungsgetriebe als Ganzes aufgrund von bei der Anwendung auf das Getriebe wirkenden Kippmomenten nicht oder höchstens in vernachlässigbarem Ausmass relativ zur Längsachse der Aktuatorwelle verkippt werden darf, damit die Funktionstüchtigkeit der Hubdrehvorrichtung erhalten bleibt (Bewegbarkeit der Aktuatorwelle).

Gemäss einem weiteren vorteilhaften Aspekt der Erfindung ist das Untersetzungsgetriebe bzw. das Getriebegehäuse in einer Platte angeordnet, welche in Richtung der Längsachse der Aktuatorwelle relativ zum Drehmotor bewegbar angeordnet ist. Durch die Anordnung des Untersetzungsgetriebes in einer Platte ist insbesondere die verdrehfeste, querkraftfeste und verkippungsfeste Anordnung des Untersetzungsgetriebes konstruktiv einfach zu realisieren.

Insbesondere kann dazu die Platte mit mindestens einer zur Längsachse der Aktuatorwelle parallelen Schiene verbunden sein, insbesondere mit zwei Schienen, wobei die Schiene bzw. Schienen in einer an einem Gehäuse des Drehmotors befestigten Führung bzw. Führungen gelagert ist bzw. sind und parallel zur Längsachse der Aktuatorwelle verschiebbar angeordnet ist bzw. sind. Es können auch mehr als zwei solcher parallelen Schienen und eine entsprechende Anzahl von Führungen vorgesehen sein. Dies ist eine konstruktiv einfache und raumsparende Variante der erfindungsgemässen Hubdrehvorrichtung.

Die Platte, die Schienen und die Führungen sowie das Gehäuse des Drehmotors sind dabei zweckmässigerweise so stabil ausgebildet, dass bei der Anwendung auf das Getriebe wirkende Querkräfte und Kippmomente von der Platte, den Schienen und den Führungen aufgenommen und in das Gehäuse des Drehmotors (und von dort in dessen Befestigung) geleitet werden können und somit nicht die Aktuatorwelle belasten.

Gemäss einem weiteren vorteilhaften Aspekt der Erfindung weist das Untersetzungsgetriebe abtriebsseitig eine Scheibe oder einen Drehteller als Abtrieb auf, an welchem auch grössere auskragende Lastmassen wie Hebelarme und dergleichen direkt befestigt werden können. Zweckmässigerweise ist dabei der Abtrieb in entsprechend dimensionierten Kugellagern gelagert.

Im Folgenden wird die Erfindung anhand eines in der Zeichnung dargestellten Ausführungsbeispiels der Hubdrehvorrichtung detaillierter beschrieben. Es zeigen:
- Fig. 1: eine perspektivische Ansicht eines Ausführungsbeispiels der erfindungsgemässen Hubdrehvorrichtung;
- Fig. 2: eine Aufsicht auf die Hubdrehvorrichtung der Fig. 1;
- Fig. 3: einen Längsschnitt nach der Linie III-III in Fig. 2;
- Fig. 4: einen Längsschnitt nach der Ebene IV-IV in Fig. 1;
- Fig. 5: eine perspektivische Ansicht eines Details der Hubdrehvorrichtung aus Fig. 1;
- Fig. 6: einen Detailschnitt nach der Linie VI-VI in Fig. 5, und
- Fig. 7: einen schematischen Axialschnitt durch ein Planetengetriebe der Hubdrehvorrichtung aus Fig. 1.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

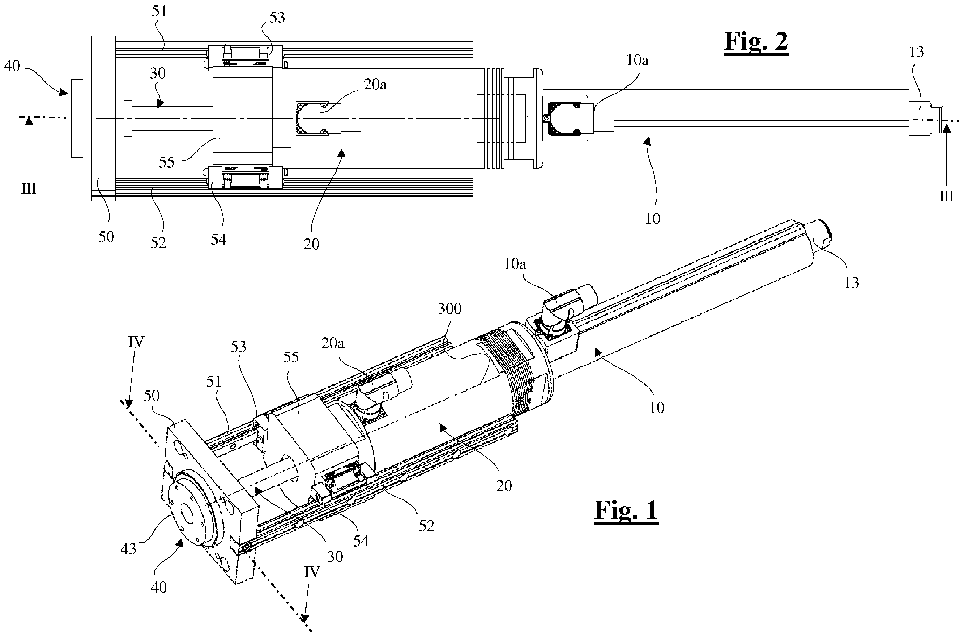

Das in **Fig. 1** **-** **Fig. 4** exemplarisch dargestellte Ausführungsbeispiel der erfindungsgemässen Hubdrehvorrichtung umfasst als wichtigste Komponenten einen Linearmotor 10, einen Drehmotor 20, eine Aktuatorwelle 30 und ein Getriebe 40, das vorzugsweise als Planetengetriebe oder als Cyclo-Getriebe ausgebildet ist. Der Linearmotor 10 umfasst einen Anschluss 10a für dessen Bestromung, und der Drehmotor 20 umfasst ebenfalls einen Anschluss 20a dessen Bestromung. Der Drehmotor 20 ist koaxial an den Linearmotor 10 angeflanscht.

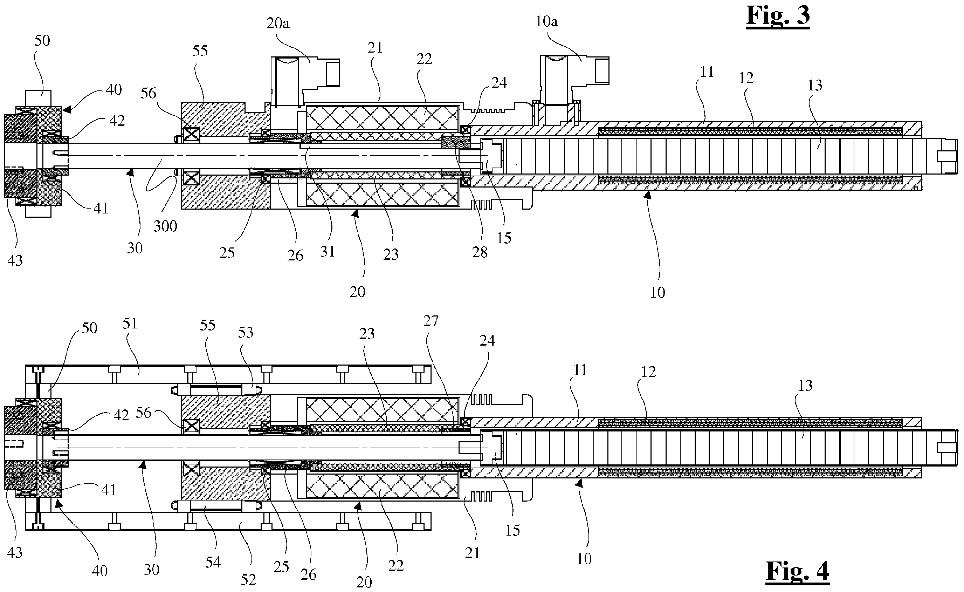

Der detailliertere Aufbau des Linearmotors 10 und des Drehmotors 20 geht aus den Schnittdarstellungen in Fig. 3 und Fig. 4 hervor.

Der Linearmotor 10 umfasst ein rohrförmiges (tubulares) Gehäuse 11, in welchem ein Stator 12 mit elektrischen Wicklungen angeordnet ist. Im Inneren des Gehäuses 11 innerhalb des Stators 12 ist ein Läufer 13 koaxial angeordnet und gleitend gelagert. Im Läufer 13 sind beispielsweise Permanentmagnete angeordnet. Der Linearmotor 10 umfasst ferner eine nicht dargestellte Sensorik (Positionsdetektor) zur Erfassung der axialen Position des Läufers 13 relativ zum Stator 12. Insofern ist der Aufbau des Linearmotor 10 konventionell und bedarf daher keiner weitergehenden Erläuterung.

Der Drehmotor 20 umfasst ein Gehäuse 21, in welchem ein Stator 22 mit elektrischen Wicklungen angeordnet ist. Ausserdem ist im Gehäuse 21 ein sich koaxial durch den Stator 22 erstreckender rohrförmiger Rotor 23 in zwei Drehlagern 24 und 25 drehbar gelagert. Der Drehmotor 20 ist vorzugsweise (aber nicht zwingend) als permanenterregter Motor ausgebildet, wobei der Rotor 23 im Wesentlichen als Hohlwelle mit aufgeklebten Permanentmagneten ausgebildet ist. Der Drehmotor 20 umfasst ferner eine nicht dargestellte Sensorik (Positionsdetektor) zur Erfassung der Drehstellung des Rotors 23 relativ zum Stator 22. Insofern ist der Aufbau des Drehmotors 20 soweit konventionell und bedarf daher keiner weitergehenden Erläuterung.

Der Linearmotor 10 und der Drehmotor 20 sind über ihre Gehäuse 11 bzw. 21 (lösbar) miteinander verbunden und gegenseitig so ausgerichtet, dass die Bewegungsachse des Läufers 13 und die Drehachse des Rotors 23 in einer Gerade liegen, d.h. der Läufer 13 und der Rotor 23 sind koaxial angeordnet.

Die Aktuatorwelle 30 weist eine Längsachse 300 auf und erstreckt sich koaxial durch den Rotor 23 des Drehmotors 20 hindurch. Die Aktuatorwelle 30 ist dabei im Rotor 23 in einem Gleitlager 26 (oder einem Linearkugellager) gelagert, sodass sie relativ zum Rotor 23 in Richtung der Längsachse 300 der Aktuatorwelle 30 (also axial) bewegbar ist. Ein dem Läufer 13 des Linearmotors 10 zugewandtes erstes Längsende der Aktuatorwelle 30 ist über eine Kupplung 15 an den Läufer 13 des Linearmotors 10 auf Zug und Schub, d.h. auf axiale Bewegung, so angekoppelt, dass die lineare Bewegung des Läufers 13 direkt auf die Aktuatorwelle 30 übertragen wird. Die Kupplung 15 ist dabei so ausgebildet, dass sich die (noch zu erläuternde) Drehbewegung der Aktuatorwelle 30 (um die eigene Längsachse 300) nicht auf den Läufer 13 überträgt.

Die Aktuatorwelle 30 ist mit dem Rotor 23 des Drehmotors 20 kinematisch drehgekoppelt. Dazu ist eine mechanische Drehkupplung in Form eines ringförmigen Mitnehmers 27 vorgesehen, an dessen Innenseite eine radial nach innen ragende Nase 28 ausgebildet bzw. angeordnet ist. Der ringförmige Mitnehmer 27 ist koaxial zum Rotor 23 des Drehmotors 20 angeordnet und mit dem Rotor 23 drehfest verbunden. Die Nase 28 des ringförmigen Mitnehmers 27 greift in eine parallel zur Längsachse 300 der Aktuatorwelle 30 angeordenete Längsnut 31 der Aktuatorwelle 30 ein und gleitet in dieser, wenn die Aktuatorwelle 30 durch den Linearmotor 10 axial bewegt wird. Durch den Mitnehmer 27 und dessen in die Längsnut 31 eingreifende Nase 28 wird die Drehbewegung des Rotors 23 des Drehmotors 20 auf die Aktuatorwelle 30 übertragen.

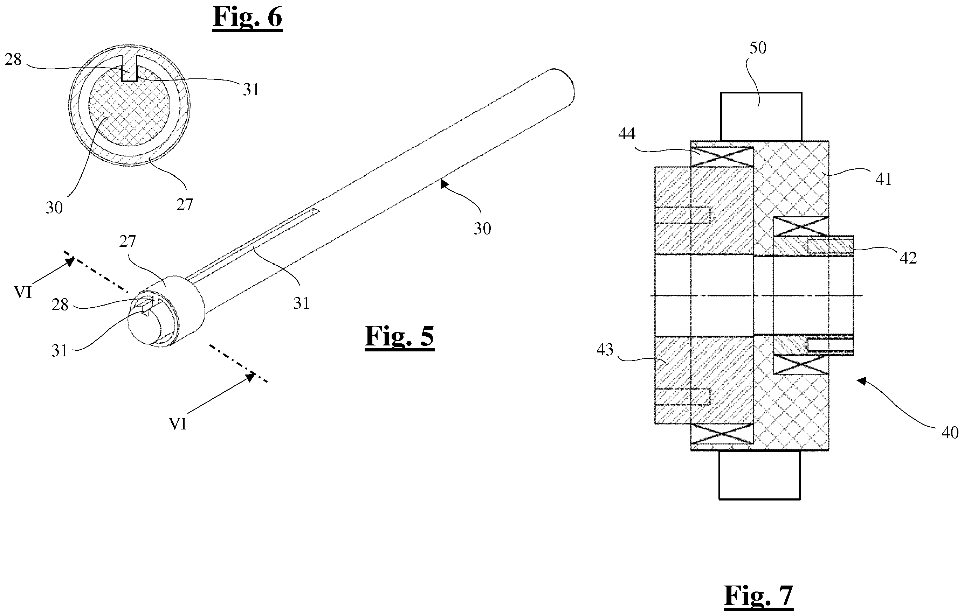

Die Ausbildung des Mitnehmers 27 mit dessen Nase 28 sowie die Ausbildung der Aktuatorwelle 30 mit deren Längsnut 31 ist aus den Detaildarstellungen in **Fig. 5 und Fig. 6** deutlicher erkennbar. Selbstverständlich kann der Mitnehmer 27 auch zwei oder mehreren Nasen umfassen und die Aktuatorwelle 30 entsprechend mit zwei oder mehreren Längsnuten ausgestattet sein. Aus den vorstehenden Erläuterungen ist klar, dass die Aktuatorwelle 30 mittels des Drehmotors 20 um ihre Längsachse 300 herum drehbar und mittels des Linearmotors 10 in Richtung ihrer Längsachse 300 bewegbar ist, so dass sie eine kombinierte Hubdrehbewegung durchführen kann.

Das bereits weiter oben schon erwähnte Untersetzungsgetriebe 40, bei dem es sich vorzugsweise um ein Planetengetriebe handelt, ist an einem dem ersten Längsende der Aktuatorwelle 30 gegenüberliegenden zweiten Längsende der Aktuatorwelle 30 angeordnet, wobei der Getriebeeingang 42 (Antriebsseite) drehfest und auch axial bewegungsfest mit der Aktuatorwelle 30 verbunden ist, so dass sowohl eine Drehbewegung der Aktuatorwelle 30 als auch eine axiale Bewegung der Aktuatorwelle 30 auf das Untersetzungsgetriebe 40 übertragen wird. Ein dem Getriebeeingang 42 koaxial gegenüberliegender Getriebeausgang 43 bildet schliesslich den Abtrieb sowohl für das Untersetzungsgetriebe 40 als auch für die gesamte Hubdrehvorrichtung.

Das Untersetzungsgetriebe 40 ist mit seinem Getriebegehäuse 41 in eine starre Platte 50 eingesetzt, welche sich senkrecht zur Aktuatorwelle 30 erstreckt. Der Getriebeausgang 43 ist als Drehteller mit grossem Durchmesser ausgebildet und in gross dimensionierten Kugellagern 44 gelagert, er dient zur Befestigung eines für den jeweiligen Anwendungszweck passenden Manipulationswerkzeugs, z.B. eines Greifers oder eines Hebelarms oder dergleichen. Aufgrund der Ausbildung des Getriebeausgangs 43 als Drehteller mit grossem Durchmesser sowie aufgrund der gross dimensionierten Kugellager 44 können auch grosse auskragende Lastmassen wie Hebelarme und dergleichen direkt am Getriebeausgang 43 befestigt werden.

Die **Fig. 7** zeigt eine Schnittdarstellung von wesentlichen Teilen des Untersetzungsgetriebes 40, wobei die "inneren" Komponenten des Getriebes (Zahnräder etc.) der Übersichtlichkeit halber nicht detailliert dargestellt sind.

Wegen der axial bewegungsfesten Verbindung der Aktuatorwelle 30 mit dem Untersetzungsgetriebe 40 ist das Untersetzungsgetriebe 40 so ausgebildet, dass auf das Untersetzungsgetriebe 40 wirkend Axialkräfte vom Untersetzungsgetriebe 40 auf die Aktuatorwelle 30 übertragen werden können, die diese Axialkräfte ihrerseits auf den Läufer 13 des Linearmotors 10 überträgt. Mit dem Linearmotor 10 können dann allenfalls solche Axialkräfte kompensiert werden, bzw. bei einer Positionsänderung in umgekehrter Richtung übertragen werden. Die Last, z.B. ein Hebelarm mit einem Greifer, kann direkt an den Getriebeausgang 43 des Untersetzungsgetriebes 40 angekoppelt werden. Entsprechend ist das Untersetzungsgetriebe 40 so ausgebildet, dass es über eine für diesen Belastungsfall ausgelegte Abtriebslagerung verfügt.

Sofern die vorstehenden Anforderungen erfüllt sind, kann das Untersetzungsgetriebe 40 anstatt als Planetengetriebe auch als Cyclo-Getriebe oder Getriebe anderer Bauart ausgebildet sein, bei welchem der Getriebeeingang und der Getriebeausgang koaxial angeordnet sind. Grundsätzlich ist auch eine Getriebebauart denkbar, bei der der Getriebeausgang nicht koaxial angeordnet ist, wobei in diesem Falle asymmetrische Kräfte auftreten und die Hubdrehvorrichtung als Ganzes eine asymmetrische Gestalt annimmt.

An der Platte 50 sind zwei zur Aktuatorwelle 30 achsparallele Schienen 51 und 52 befestigt, welche jeweils in einer Führung 53 bzw. 54 in ihrer Längsrichtung gelagert und parallel zur Längsachse 300 der Aktuatorwelle 30 verschiebbar sind. Die beiden Führungen 53 und 54 sind zu beiden Seiten an einem hohlen Montageblock 55 befestigt, der seinerseits koaxial am Gehäuse 21 des Drehmotors 20 angeflanscht ist. Alternativ kann der Montageblock 55 auch als Teil des Gehäuses 21 ausgebildet sein. Die Aktuatorwelle 30 erstreckt sich durch den hohlen Montageblock 55 und kann in diesem in einem weiteren Lager 56 zusätzlich gelagert werden. Die Platte 50, die beiden Schienen 51 und 52 sowie die Führungen 53 und 54 sind so stabil ausgebildet und bewegungssteif miteinander verbunden, dass sich die Platte 50 und damit das Getriebegehäuse 41 (relativ zum Drehmotor 20) nicht verdrehen kann und auch eine Bewegung der Platte 50 bzw. des Untersetzungsgetriebes 40 quer zur Aktuatorwelle 30 verhindert wird. Ferner werden durch die angeschlossene Last bzw. deren Bewegung verursachte Kippmomente über das Getriebegehäuse 41 und die Platte 50 sowie über die Schienen 51 und 52 und deren Führungen 53 und 54 vom Montageblock 55 (bzw. dem Gehäuse des Drehmotors) aufgenommen und gegebenenfalls abgeleitet, sodass sie die Aktuatorwelle 30 und die mit ihr verbundenen Komponenten der Hubdrehvorrichtung nicht belasten. Die Aktuatorwelle 30 der Hubdrehvorrichtung erfährt somit keinerlei Belastung durch Querkräfte oder Kippmomente und muss lediglich das Drehmoment und die axiale Kraft übertragen können. Entsprechend kann der Durchmesser der Aktuatorwelle auf die Erfordernisse des Hubdrehmotors optimiert werden und ist konstruktiv unabhängig von Querkräften und Kippmomenten der Last.

Die Platte 50 ist mitsamt dem in sie eingesetzten Untersetzungsgetriebe 40 über die Aktuatorwelle 30 vom Linearmotor 10 in Richtung der Längsachse 300 der Aktuatorwelle 30 bewegbar. Die lineare Bewegung der Aktuatorwelle 30 wird also auf das Untersetzungsgetriebe 40 und die Platte 50 übertragen. Anderseits treibt die Aktuatorwelle 30 das Untersetzungsgetriebe 40 eingangsseitig drehend an, wobei sich der Getriebeausgang 43 entsprechend dem Untersetzungsverhältnis i des Getriebes um den Faktor 1/i langsamer dreht.

Im Unterschied zum eingangs beschriebenen Lösungsansatz mit Lastanpassung durch ein zwischen Linearmotor und Drehmotor eingefügtes Untersetzungsgetriebe findet bei der erfindungsgemässen Hubdrehvorrichtung die Untersetzung mit Faktor i also nicht vor der mechanischen Drehkupplung des Rotors des Drehmotors statt, sondern nach der mechanischen Drehkupplung zwischen dem Rotor des Drehmotors und der Aktuatorwelle. Dadurch ergibt sich eine Reihe von Vorteilen, nämlich:
- Das zu übertragende Drehmoment in der mechanischen Drehkupplung wird nicht um den Faktor i vergrössert. Die mechanische Drehkupplung zwischen dem Rotor des Drehmotors und der Aktuatorwelle muss lediglich das Antriebsmoment des Drehmotors übertragen können und befindet sich auf der Antriebsseite des Untersetzungsgetriebes. Die Belastung und damit die Auslegung der Drehkupplung sind durch das zu übertragende Drehmoment und nicht durch die Drehzahl bestimmt. Die Auslegung der Drehkupplung ist also unabhängig von der Lastanpassung und kann daher auf die Anwendungserfordernisse der Hubdrehvorrichtung hin optimiert werden.
- Das Spiel der mechanischen Drehkupplung (zwischen Mitnehmernase und Längsnut) liegt vor dem Untersetzungsgetriebe. Dadurch wird das Spiel um den Faktor 1/i der Getriebeuntersetzung reduziert auf die Last abgebildet. Entsprechend wird eine radiale Störgrösse, z.B. ein Drehstoss, der auf die Last wirkt, um den Faktor i verstärkt auf die Antriebsseite des Getriebes übersetzt. Dies ist vorteilhaft, da so die Drehwinkelsensorik im Drehmotor 20 ein um den Faktor i verstärktes Störsignal erhält und schneller darauf reagieren kann.
- Die Aktuatorwelle muss lediglich Drehmoment und die lineare (axiale) Kraft übertragen können und ist frei von seitlicher Belastung (Querkräfte) und von Kippmomenten. Die insbesondere in Anwendungen mit langem Hebelarm vorkommenden Kippbelastungen werden vollständig durch die seitliche Führung aufgenommen. Es kann jedoch trotzdem eine vergleichsweise schmale Bauform der gesamten Hubdrehvorrichtung erreicht werden.
- Der Durchmesser der Aktuatorwelle kann klein gewählt werden, da die eigentliche Lastabstützung durch das in die Platte eingesetzte Untersetzungsgetriebe und die parallele Führung der Platte bzw. des Untersetzungsgetriebes erfolgt.
- Die Lastanpassung erfolgt über das axial bewegte Untersetzungsgetriebe. Die Masse des Untersetzungsgetriebes ist wesentlich kleiner als die Masse des entsprechenden Drehmotors. Im Vergleich zum eingangs erwähnten Lösungsansatz, bei welchem der gesamte Drehmotor inklusive Planetengetriebe bewegt wird, muss also wesentlich weniger Masse axial bewegt werden.
- Da die Last direkt an das Untersetzungsgetriebe angekoppelt wird, kann die sehr stabile abtriebsseitige Lagerung des Untersetzungsgetriebes optimal genutzt werden.
- Da der Drehmotor nicht bewegt wird, sind keine (wartungsintensiven) Schleppkettenkabel für die Stromversorgung und Steuerung des Drehmotors erforderlich.

Die Erfindung wurde anhand eines Ausführungsbeispiels erläutert, soll jedoch nicht auf das Ausführungsbeispiel beschränkt sein. Vielmehr sind für den Fachmann zahlreiche Modifikationen denkbar, ohne dabei von der Lehre der Erfindung abzuweichen. Der Schutzbereich wird daher durch die nachstehenden Patentansprüche definiert.

## Patentansprüche

1. Hubdrehvorrichtung mit einer Aktuatorwelle (30) mit einer Längsachse (300), mit einem Linearmotor (10) zur Bewegung der Aktuatorwelle (30) in Richtung ihrer Längsachse (300), sowie mit einem Drehmotor (20) zur Bewegung der Aktuatorwelle (30) um ihre Längsachse (300) herum, wobei der Drehmotor (20) einen hohlen Rotor (23) aufweist, durch welchen die Aktuatorwelle (30) hindurchgeführt ist und welcher mit der Aktuatorwelle (30) kinematisch drehgekoppelt ist, und wobei der Linearmotor (10) relativ zum Drehmotor (20) ortsfest angeordnet ist und einen zu der durch den Rotor (23) des Drehmotors (20) hindurchgeführten Aktuatorwelle (30) koaxial angeordneten Läufer (13) aufweist, welcher an einem ersten Längsende der Aktuatorwelle (30) mit der Aktuatorwelle (30) kinematisch gekoppelt ist in Bezug auf die Bewegung der Aktuatorwelle (30) in Richtung ihrer Längsachse (300), **gekennzeichnet durch** ein Untersetzungsgetriebe (40), wobei das Untersetzungsgetriebe (40) an einem zweiten Längsende der Aktuatorwelle (30) angeordnet ist und in Richtung der Längsachse (300) der Aktuatorwelle (30) relativ zum Drehmotor (20) bewegbar angeordnet ist, und wobei das Untersetzungsgetriebe (40) antriebsseitig kinematisch mit der Aktuatorwelle (30) gekoppelt ist, und zwar sowohl in Bezug auf eine Bewegung in Richtung der Längsachse (300) der Aktuatorwelle (30) als auch in Bezug auf eine rotative Bewegung um die Längsachse der Aktuatorwelle (30) herum.

2. Hubdrehvorrichtung nach Anspruch 1, **dadurch gekennzeichnet, dass** das Untersetzungsgetriebe (40) zur Übertragung von Axialkräften auf die Aktuatorwelle (30) ausgebildet ist.

3. Hubdrehvorrichtung nach einem der Ansprüche 1 oder 2, **dadurch gekennzeichnet, dass** das Untersetzungsgetriebe (40) ein Getriebegehäuse (41) aufweist, und dass das Getriebegehäuse (41) relativ zum Drehmotor (20) drehfest angeordnet ist.

4. Hubdrehvorrichtung nach einem der Ansprüche 1 bis 3, **dadurch gekennzeichnet, dass** das Untersetzungsgetriebe (40) querkraftfest relativ zur Längsachse (300) der Aktuatorwelle (30) angeordnet ist.

5. Hubdrehvorrichtung nach einem der Ansprüche 1 bis 4, **dadurch gekennzeichnet, dass** das Untersetzungsgetriebe (40) relativ zur Längsachse der Aktuatorwelle verkippungsfest angeordnet ist.

6. Hubdrehvorrichtung nach einem der Ansprüche 1 bis 5, **dadurch gekennzeichnet, dass** das Untersetzungsgetriebe (40) bzw. das Getriebegehäuse (41) in einer Platte (50) angeordnet ist, welche in Richtung der Längsachse (300) der Aktuatorwelle (30) relativ zum Drehmotor (20) bewegbar angeordnet ist.

7. Hubdrehvorrichtung nach Anspruch 6, **dadurch gekennzeichnet, dass** die Platte (50) mit mindestens einer zur Längsachse (300) der Aktuatorwelle (30) parallelen Schiene, insbesondere mit zwei Schienen (51, 52) verbunden ist, wobei die Schiene bzw. Schienen (51, 52) in einer an einem Gehäuse des Drehmotors (20) befestigten Führung bzw. Führungen (53, 54) gelagert und parallel zur Länsgachse (300) der Aktuatorwelle (30) verschiebbar angeordnet ist bzw. sind.

8. Hubdrehvorrichtung nach einem der vorangehenden Ansprüche, **dadurch gekennzeichnet, dass** das Untersetzungsgetriebe (40) abtriebsseitig eine Scheibe oder einen Drehteller als Abtrieb (43) aufweist.

9. Hubdrehvorrichtung nach einem der vorangehenden Ansprüche, **dadurch gekennzeichnet, dass** das Untersetzungsgetriebe (40) ein Planetengetriebe ist.

## Claims

1. Rotary lifting device comprising an actuator shaft (30) having a longitudinal axis (300), a linear motor (10) for moving the actuator shaft (30) in the direction of the longitudinal axis (300) thereof, and a rotary motor (20) for rotating the actuator shaft (30) about the longitudinal axis (300) thereof, wherein the rotary motor (20) has a hollow rotor (23) through which the actuator shaft (30) extends and which is kinematically coupled to the actuator shaft (30) in terms of rotation, and wherein the linear motor (10) is arranged in a fixed manner relative to the rotary motor (20) and has an armature (13) which is arranged coaxially with respect to the actuator shaft (30) extending through the rotor (23) of the rotary motor (20) and which is kinematically coupled to the actuator shaft (30) at a first longitudinal end thereof with respect to the movement of the actuator shaft (30) in the direction of the longitudinal axis (300) thereof,
**characterized by** a step-down gear (40), wherein the step-down gear (40) is arranged at a second longitudinal end of the actuator shaft (30) and is arranged so as to be able to be moved relative to the rotary motor (20) in the direction of the longitudinal axis (300) of the actuator shaft (30), and wherein the step-down gear (40) is kinematically coupled to the actuator shaft (30) at the input side of the step-down gear, both with respect to a movement in the direction of the longitudinal axis (300) of the actuator shaft (30) and with respect to a rotary movement about the longitudinal axis of the actuator shaft (30).

2. Rotary lifting device according to claim 1, **characterized in that** the step-down gear (40) is configured to transmit axial forces to the actuator shaft (30).

3. Rotary lifting device according to anyone of claims 1 or claim 2, **characterized in that** the step-down gear (40) comprises a gear housing (41), and wherein the gear housing (41) is arranged in a rotationally fixed manner relative to the rotary motor (20).

4. Rotary lifting device according to anyone of claims 1 to 3, **characterized in that** the step-down gear (40) is arranged relative to the longitudinal axis (300) of the actuator shaft (30) in a manner resistant against transverse forces.

5. Rotary lifting device according to anyone of claims 1 to 4, **characterized in that** the step-down gear (40) is arranged relative to the longitudinal axis of the actuator shaft in a manner resistant against tilting.

6. Rotary lifting device according to anyone of claims 1 to 5, wherein the step-down gear (40) or the gear housing (41), respectively, is arranged in a plate (50) which is arranged so as to be able to be moved relative to the rotary motor (20) in the direction of the longitudinal axis (300) of the actuator shaft (30).

7. Rotary lifting device according to claim 6, **characterized in that** the plate (50) is connected to at least one rail which is arranged parallel to the longitudinal axis (300) of the actuator shaft (30), in particular to two rails (51, 52), with the rail or rails (51, 52) being supported in a guide or guides (53, 54) which is/are secured to a housing of the rotary motor (20), and with the rails being displaceably arranged parallel to the longitudinal axis (300) of the actuator shaft (30).

8. Rotary lifting device according to anyone of the preceding claims, **characterized in that** the step-down gear (40) at its output side comprises a disc or a rotary plate as an output (43).

9. Rotary lifting device according to anyone of the preceding claims, **characterized in that** the step-down gear (40) is a planetary gear.

## Revendications

1. Dispositif de levage-rotation avec un arbre d'actionnement (30) ayant un axe longitudinal (300), avec un moteur linéaire (10) pour un mouvement de l'arbre d'actionnement (30) en direction de son axe longitudinal (300), et avec un moteur rotatif (20) pour un mouvement de l'arbre d'actionnement (30) autour de son axe longitudinal (300), le moteur rotatif (20) ayant un rotor creux (23) au travers duquel l'arbre d'actionnement (30) est passé et lequel est cinématiquement couplé en rotation avec l'arbre d'actionnement (30), et le moteur linéaire (10) étant agencé de manière fixe par rapport au moteur rotatif (20) et comprends une armature (13) agencée de manière coaxiale par rapport à l'arbre d'actionnement (30) qui est passé au travers du rotor (23) du moteur rotatif (20), ladite armature étant cinématiquement couplée avec l'arbre d'actionnement (30) à une première extrémité longitudinale de celui-ci par rapport à un mouvement de l'arbre d'actionnement (30) en direction de son axe longitudinal (300), **caractérisé par** un réducteur (40), le réducteur (40) étant agencé à une deuxième extrémité longitudinale de l'arbre d'actionnement (30) et étant agencé de manière mobile relatif au moteur rotatif (20) en direction de l'axe longitudinale (300) de l'arbre d'actionnement (30), et le réducteur (40) étant cinématiquement couplé avec l'arbre d'actionnement (30) au côté d'entrée du réducteur, à la fois par rapport à un mouvement en direction de l'axe longitudinale (300) de l'arbre d'actionnement (30) et par rapport à un mouvement rotatif autour de l'axe longitudinale de l'arbre d'actionnement (30).

2. Dispositif de levage-rotation selon la revendication 1, **caractérisé en ce que** le réducteur (40) est configuré pour transmettre des forces axiales sur l'arbre d'actionnement (30).

3. Dispositif de levage-rotation selon l'une des revendications 1 ou 2, **caractérisé en ce que** le réducteur (40) comprend un boîtier de réducteur (41) et que le boîtier de réducteur (41) est agencé de manière fixe en rotation relatif au moteur rotatif (20).

4. Dispositif de levage-rotation selon l'une des revendications 1 à 3, **caractérisé en ce que** le réducteur (40) est agencé relatif à l'axe longitudinale (300) de l'arbre d'actionnement (30) de manière à être résistant contre des forces transversales.

5. Dispositif de levage-rotation selon l'une des revendications 1 à 4, **caractérisé en ce que** le réducteur (40) est agencé relatif à l'axe longitudinale de l'arbre d'actionnement de manière à être résistant contre des forces de basculement.

6. Dispositif de levage-rotation selon l'une des revendications 1 à 5, **caractérisé en ce que** le réducteur (40) ou, respectivement, le boîtier de réducteur (41) est agencé dans une plaque (50) qui est agencée de manière mobile relatif au moteur rotatif (20) en direction de l'axe longitudinale (300) de l'arbre d'actionnement (30).

7. Dispositif de levage-rotation selon la revendication 6, **caractérisé en ce que** la plaque (50) est connectée avec au moins un rail étant parallèle à l'axe longitudinale (300) de l'arbre d'actionnement (30), en particulier la plaque est connectée avec deux rails (51, 52), le rail ou, respectivement, les rails (51, 52) étant supporté(s) dans un guide ou, respectivement des guides (53, 54) étant fixé(s) au boîtier du moteur rotatif (20), et étant agencé(s) de manière déplaçable parallèle à l'axe longitudinale (300) de l'arbre d'actionnement (30).

8. Dispositif de levage-rotation selon l'une des revendications précédentes, **caractérisé en ce que** le réducteur (40) comprend un disque ou une assiette comme sortie (43) au côté de la sortie du réducteur.

9. Dispositif de levage-rotation selon l'une des revendications précédentes, **caractérisé en ce que** le réducteur (40) est un engrenage planétaire.
